# EUROPÄISCHE PATENTSCHRIFT

(11) **EP 0 812 741 B1**
(45) Veröffentlichungstag und Bekanntmachung des Hinweises auf die Patenterteilung: **05.12.2001**
(21) Anmeldenummer: 97104893.9
(22) Anmeldetag: 21.03.1997
(51) Int. Cl.: B60R 21/32, B60R 21/22, B60R 21/24, B60R 21/26

(54) **Airbagvorrichtung in einem Kraftfahrzeug**
Air bag device in a motor vehicle
Dispositif de coussin gonflable dans un véhicule automobile

(30) Priorität: 22.03.1996 DE 19611384; 27.02.1997 DE 19707997
(43) Veröffentlichungstag der Anmeldung: 17.12.1997
(73) Patentinhaber: HS Technik und Design Technische Entwicklungen GmbH, 82234 Wessling (DE)
(72) Erfinder: Specht, Martin, 82340 Feldafing (DE)
(74) Vertreter: Nöth, Heinz, Dipl.-Phys.

(56) Entgegenhaltungen:
- WO-A-90/09908
- DE-A- 4 041 049
- DE-A- 19 526 334
- FR-A- 2 260 470
- GB-A- 2 289 653
- US-A- 5 280 953
- US-A- 5 282 646
- US-A- 5 413 378
- PATENT ABSTRACTS OF JAPAN vol. 015, no. 168 (M-1107), 26.April 1991 & JP 03 032956 A (MAZDA MOTOR CORP), 13.Februar 1991,

## Beschreibung

Die Erfindung betrifft eine Airbagvorrichtung nach dem Oberbegriff des Patentanspruches 1.

Beim Befüllen des Gaskissens, insbesondere mit einem großen Füllvolumen von über 100 Liter, z.B. bis 130 Liter, in einer mittleren Füllzeit von ca. 25 ms werden erhebliche Reaktionskräfte an der Verankerung des Gaskissens im Kraftfahrzeug, beispielsweise im Bereich der Instrumententafel oder auch im Fahrgastraum, an Gegenstände,die sich im ausbreitenden Füllvolumen des Gaskissens befinden, wirksam. Beispielsweise ist es aus der DE 43 34 606 A bekannt, während des Aufblasvorganges eine gesteuerte lösbare Verbindung im Innenraum des Gaskissens vorzusehen, durch welche in mehreren Stufen Anfangskräfte, Zwischenkräfte und Endkräfte wirksam werden. Ferner ist es bekannt (DE 42 35 761 A), zum Schutz von Fahrzeuginsassen ein relativ weiches Gaspolster an der Gaskissenoberfläche vorzusehen. Ferner ist es aus der DE 42 28 624 A bekannt, bei einem auf dem Beifahrersitz vorgesehenen Kindersitzes eine Sitzbelegungserkennung nicht zu betätigen, so daß ein Aufblasen des Gaskissens und damit sein Aufprall auf die Kinderaufnahme verhindert wird.

Aus der GB 2 289 653 A, von welcher im Oberbegriff des Patentanspruches 1 ausgegangen wird, ist eine Airbagvorrichtung bekannt, bei der die Füllgasmenge in Abhängigkeit vom Druck innerhalb des Gaskissens bis zur vollständigen Füllung gesteuert wird oder Füllgas so lange zugeführt wird, bis das Gaskissen mit einem Gegenstand im Fahrgastraum zusammenstößt.

Aus der DE 40 41 049 A ist es bekannt, die Füllgasmenge dem Gaskissen stufenweise, beispielsweise durch Ventilsteuerung zuzuführen.

Aus der US 5 413 378 A ist bekannt, in Abhängigkeit vom Gewicht des auf dem Fahrzeugsitz befindlichen Insassen den Füllgasdruck im Gaskissen, beispielsweise über Ventilsteuerung einzustellen.

Aus der FR 2 260 470 A ist bekannt, Füllgas durch Luftauslässe aus dem Gaskissen zu entfernen, wenn das Gaskissen im Fahrgastraum auf ein Hindernis trifft.

Aus der WO90 09908 A ist es beim Füllen eines Gaskissens, das aus einer mittleren Gaskissenkammer und einer diese Kammer perifer umgebenden Kammer besteht, bekannt, zunächst die perifere Kammer zu füllen, wobei dann Störmungswege zum Füllen der mittleren Kammer geöffnet werden. Hierbei kann die mittlere Kammer mit einem geringeren Fülldruck als die perifere Kammer gefüllt werden. Hierzu kann ein Ventil vorgesehen sein, um den Fülldruck in der mittleren Kammer zu verringern.

Aus JP 03 032956 A ist es bekannt, eine Airbageinheit in drei Kammern aufzuteilen, die unabhängig voneinander gefüllt werden.

Aufgabe der Erfindung ist es, eine Airbagvorrichtung der eingangs genannten Art zu schaffen, welche die jeweilige beim Aufblasvorgang im Bereich des Füllvolumens des Gaskissens vorhandene Situation berücksichtigt.

Diese Aufgabe wird erfindungsgemäß durch das Kennzeichen des Patentanspruches 1 gelöst. Bei der Erfindung erreicht man eine Echtzeitsteuerung des Füllvorganges, wobei das Gaskissen so lange befüllt wird, bis während des Vorschubes ein Gegenstand den Vorschub des Gaskissens beim Entfalten behindert. Dies kann beispielsweise ein zu weit vorverlagertes Körperteil des Fahrzeuginsassen, beispielsweise dessen Kopf oder Oberkörper, sein oder ein auf dem Beifahrersitz angeordneter Kindersitz. Insbesondere Beifahrer, welche nicht in der normalen Sitzposition im Beifahrersitz sich befinden, sondern beispielsweise in einer vorverlagerten Stellung (Out-Of-Position-Stellung, z.B. beim Schlafen) können den ungehinderten Vorschub des Gaskissens behindern, wobei die in das Gaskissen gelieferte Gasmenge so gesteuert ist, daß nur noch ein verringertes Füllvolumen an Gas in das Gaskissen eingebracht wird. Hierdurch wird die Gefahr der Verletzung des Fahrzeuginsassen, insbesondere Beifahrers oder im Kindersitz befindlichen Kindes vermindert.

Die in das Gaskissen gelieferte Gasmenge ist dabei proportional der freien Weglänge, bei welcher ein ungehinderter Vorschub des Gaskissens in den Fahrgastraum erfolgt. In bevorzugter Weise erfolgt die Vorschubabtastung in einer Anfangsphase des Füllvorgangs. Wenn ein Hindernis im sich ausbreitenden Füllvolumen des Gaskissens auftritt, wird eine nur noch begrenzte Menge an Füllgas in das Gaskissen eingefüllt.

Hierzu kann die Zufuhr an Füllgasmenge kontinuierlich z.B. aus einem Gas (Flüssiggas)-Vorratsbehälter in das Gaskissen erfolgen und dann in Abhängigkeit von der festgestellten unbehinderten Vorschublänge bzw. -zeit der Füllvorgang abgebrochen werden. In bevorzugter Weise erfolgt jedoch die Zuführung der Füllgasmenge in das Gaskissen stufenweise. Dies kann gewährleistet werden durch mehrere Gasgeneratoren, die in zeitlicher Aufeinanderfolge in Abhängigkeit von dem unbehinderten Vorschub des Gaskissens für den Füllvorgang gezündet werden.

Wenn von der Sensoreinrichtung eine überhöhte Fahrzeuggeschwindigkeitsänderung, beispielsweise bei einem Unfall, festgestellt wird, wird durch die Sensoreinrichtung eine Primärzündung ausgelöst, durch welche zunächst nur ein Teil der Gasgeneratoren, insbesondere die Gasgeneratoren, welche zur Füllung eines mittleren Bereiches des Gaskissens dienen, gezündet. Während dieser Anfangsphase des Füllvorganges erfolgt die Abtastung der ungehinderten Vorschublänge bzw. ungehinderten Vorschubzeit. Als Kriterium für ein Hindernis kann die Vorschubgeschwindigkeit abgetastet werden, wobei eine Verringerung der Vorschubgeschwindigkeit ein Merkmal für ein Hindernis im sich in den Fahrgastraum ausbreitenden Füllvolumen des Gaskissens ist.

Ferner kann bei einem bevorzugten Ausführungsbeispiel, welches für sich Erfindungscharakter hat, das Gaskissen seitliche an ein mittleres Kissenteil angeformte Kissenteile aufweisen, die im aufgeblasenen Zustand in bevorzugter Weise weiter in den Fahrzeuginnenraum ragen können als das mittlere Kissenteil.

Das mittlere Kissenteil liegt im aufgeblasenen Zustand der normalen Sitzposition des Fahrzeuginsassen gegenüber, während die beiden seitlichen Kissenteile sich zu beiden Seiten dieser Position erstrecken. Die beiden seitlichen Kissenteile sind im Winkel zu einer vertikalen Mittelebene des aufgeblasenen Kissens angeordnet. Dazwischen liegt das mittlere Kissenteil. Hierdurch wird erreicht, daß ein hoher Anteil des Füllvolumens sich nicht direkt auf den Fahrzeuginsassen zu bewegt, sondern seitlich von dieser Position. Das mittlere Kissenteil erstreckt sich gegenüber den seitlichen Kissenteilen bevorzugt um eine geringere Strecke in den Fahrgastraum, so daß auch bei einer vorverlagerten Stellung des Fahrzeuginsassen dieser Kissenteil dem Fahrzeuginsassen mit verminderter Kraft oder aufgrund seiner reduzierten Vorschubstrecke überhaupt nicht trifft. Ferner kann die Entfaltungsrichtung des Gaskissens bei einem Beifahrerairbag von der Armaturentafel in bevorzugter Weise annähernd vertikal oder mit sehr spitzem Winkel gegenüber der Vertikalen schräg nach oben gerichtet sein. Bei einem Unfallverlauf wirken die beiden seitlichen Kissenteile, die in bevorzugter Weise zeitlich vor dem mittleren Kissenteil aufgeblasen werden, als Führungen für das nach vorne verlagerte Körperteil, insbesondere den Kopf des Fahrzeuginsassen zum mittleren Kissenteil hin, welches so weit in den Fahrgastraum ragt, daß es die erforderliche Schutzfunktion ausübt.

Das Gaskissen, welches im Kopf/Torax-Bereich einen Schutz für den Körper des Fahrzeuginsassen bildet, kann mit einem unten liegenden Gaskissen, das im Kniebereich des Fahrzeuginsassen eine Schutzfunktion ausübt, kombiniert sein. Beide Gaskissen sind getrennt voneinander angeordnet und werden gegebenenfalls auch von separaten Füllgasquellen beliefert.

Bei einem Beifahrerairbag ist das Gaskissen bzw. sind die Gaskissen in der Weise ausgebildet, daß auf einen auf dem Beifahrersitz angeordneten Kindersitz, insbesondere Rebord-Schalensitz, beim Aufblasen keine überhöhten Kräfte einwirken. In bevorzugter Weise wird dies dadurch erreicht, daß zwischen dem oben angeordneten Gaskissen und dem unten angeordneten Gaskissen ein Freiraum vorgesehen ist. Der Kindersitz, insbesondere Rebord-Schalensitz, kann daher verschiedene Neigungsstellungen des Kopfteiles aufweisen, ohne daß auf diesen Kopfteil überhöhte Kräfte beim Aufblasen der Gaskissen wirken. Die Unterseite des oben liegenden Gaskissens und die Oberseite des unten liegenden Gaskissens können dabei so gestaltet sein, daß das Kissengewebe beim Aufblasen am Schalenkörper des Kindersitzes vorbei bewegt wird oder den Schalenkörper nur im spitzen Winkel und gegebenenfalls annähernd tangential trifft, so daß nur eine geringe Krafteinwirkung auf den Kindersitz ausgeübt wird.

Um ein gezieltes Aufblasen des jeweiligen Gaskissens, insbesondere in zeitlicher Aufeinanderfolge derart, daß zunächst die beiden seitlichen Kissenteile und dann das mittlere Kissenteil aufgeblasen werden, zu erreichen, können mehrere Kammern, d.h. wenigstens drei Kammern, vorgesehen sein, von denen zwei Kammern zum Aufblasen der beiden seitlichen Kissenteile dienen. Wenigstens eine Kammer dient zum Aufblasen des mittleren Kissenteils.

In bevorzugter Weise ist das Gaskissen in der Weise ausgebildet, daß die jeweilige beim Aufblasvorgang im Bereich des Füllvolumens des Gaskissens vorhandene Situation berücksichtigt wird. Insbesondere wird der Aufblasvorgang dabei in Abhängigkeit davon gesteuert, ob im Bereich des Aufblasvolumens im Fahrgastraum Gegenstände, beispielsweise ein Kindersitz oder eine Person mit einem Körperteil, insbesondere in Out-Off-Position vorhanden ist. In Ausgestaltung der Erfindung kann die pro Zeiteinheit in die jeweiligen Kammern des Gaskissens gelieferte Gasmenge durch den ungehinderten Vorschub des Gaskissens in den Fahrgastraum gesteuert werden. Diese Steuerung findet bevorzugt in Echzeit statt, wobei die jeweiligen Gaskammern des Gaskissens so lange befüllt werden, bis während des Vorschubes ein Gegenstand den Vorschub des Gaskissens beim Entfalten behindert. Dies kann beispielsweise ein zu weit vorverlagertes Körperteil des Fahrzeuginsassen sein oder ein auf den Beifahrersitz angeordneter Kindersitz. Insbesondere Beifahrer, welche nicht in der normalen Sitzposition im Beifahrersitz sich befinden, sondern beispielsweise in einer vorverlagerten Stellung (Out-Off-Position z.B. beim Schlafen), können dem Vorschub des Gaskissens im Wege stehen. Die in das Gaskissen gelieferte Gasmenge wird dann so gesteuert, daß nur noch ein verringertes Füllvolumen an Gas eingebracht wird. Hierdurch wird die Verletzungsgefahr insbesondere des Beifahrers oder eines im Kindersitz befindlichen Kindes erheblich verringert.

In bevorzugter Weise ist die in das Gaskissen gelieferte Gasmenge proportional einer abgetasteten Länge und/oder Zeit des ungehinderten Vorschubs des Gaskissens in den Fahrgastraum. Die Vorschubabtastung erfolgt während des Füllvorgangs, wobei die Steuerung des Füllvorgangs in Abhängigkeit vom Auftreten eines Hindernisses in das sich ausbreitende Füllvolumen des Gaskissens erfolgt. Der sich zeitlich an die Vorschubabtastung anschließende Füllvorgang wird bei Auftreten eines Hindernisses beendet. Hierdurch wird eine begrenzte Menge an Füllgas in das Gaskissen geliefert.

Die Vorschubabtastung mittels Erfassen der Zeit des ungehinderten Vorschubs des Gaskissens fällt nicht unter die beanspruchte Erfindung.

Die dem Gaskissen zugeführte Menge an Füllgas kann durch eine Ventilsteuerung eingestellt werden. Beispielsweise kann hierzu eine Blendenvorrichtung verwendet werden, welche die gewünschte Zufuhr der Gasmenge in die jeweiligen Kammern gewährleistet und die restliche vom Gasgenerator erzeugte Gasmenge so umleitet, daß sie nicht in das Gaskissen gelangt. Hierzu können eine oder mehrere gesteuerte Blenden im Gasströmungsweg zwischen der Gasquelle (pyrotechnischer Gasgenerator, Hybridgasgenerator oder dergleichen) und den jeweiligen Kammern, die mit dem Füllgas zu versorgen sind, vorgesehen sein.

In bevorzugter Weise erfolgt die Zuführung der Füllgasmenge in den Gassack stufenweise. Dies kann durch mehrere Gasgeneratoren erreicht werden, die in zeitlicher Aufeinanderfolge in Abhängigkeit von dem unbehinderten Vorschub des Gaskissens für den Füllvorgang angezündet werden. Als Kriterium für ein Hindernis kann die Vorschubgeschwindigkeit des Gaskissens, während des Füllvorgangs, abgetastet werden. Zur stufenweise Belieferung des Gaskissens, insbesondere in Abhängigkeit von der behinderungsfreien Vorschubabtastung, können die jeweiligen Kammern durch trennbare Verschlüsse insbesondere Aufreisnähte in mehrere Fächer unterteilt sein. Die Befüllung der Fächer erfolgt in Abhängigkeit von der jeweiligen Vorschubabtastung. Hierbei kann der Vorschub des mittleren Kissenteils und der jeweilige Vorschub der beiden seitlichen Kissenteile separat erfolgen, so daß in Abhängigkeit von dieser Abtastung jeweilige Fächer in diesen Kissenteilen gefüllt werden.

Die Zufuhr des Füllgases in das Gaskissen kann in der Weise erfolgen, daß bei fertig gefülltem Gaskissen im mittleren Kissenteil ein niedrigerer Fülldruck, insbesondere mit Normaldruck oder gering darüber vorliegt als in den beiden seitlichen Kissenteilen. Ferner kann der Füllgasdruck insbesondere im mittleren Kissenteil in Abhängigkeit vom Gewicht des auf dem Beifahrersitz befindlichen Fahrzeuginsassen eingestellt werden.

Zusätzlich kann am Beifahrersitz bei einem befestigten Kindersitz ein Begrenzungsriegel aktiviert werden, welcher eine Verstellung des Beifahrersitzes nach vorne begrenzt. Hierdurch wird gewährleistet, daß bei verschiedenen Neigungsstellungen, insbesondere des Kopfteils des Rebord-Schalensitzes, auf diesen keine überhöhten Kräfte beim Aufblasen der Gaskissen ausgeübt werden.

Die Erfindung erweist sich insbesondere als Beifahrerairbagvorrichtung von Vorteil.

Anhand der Figuren wird die Erfindung noch näher erläutert. Es zeigt:
- Fig. 1:: ein erstes Ausführungsbeispiel für eine Airbagvorrichtung;
- Fig. 2:: ein Blockschaltbild einer Auswerteeinrichtung, welche die Meßergebnisse der Vorschubabtastung für eine Steuereinrichtung zur Steuerung der Fülleinrichtung auswertet;
- Fig. 3:: eine Anfangsphase des Füllvorganges des ersten Ausführungsbeispiels;
- Fig. 4(A)-(C): in perspektivischer Darstellung verschiedene Anordnungen von aufgeblasenen Gaskissen weiterer Ausführungsbeispiele am Beifahrervordersitz in einem Kraftfahrzeug;
- Fig. 5:: in Draufsicht das aufgeblasene Gaskissen;
- Fig. 6:: ein Muster von Sollbruchlinien in einer Abdeckung, unter welcher das Gaskissen im Ruhezustand angeordnet ist;
- Fig. 7:: in schematischer Darstellung, das im Ruhezustand angeordnete Gaskissen, welches bei den Ausführungsbeispielen der Fig. 4(A) bis (C) verwendet werden kann;
- Fig. 8:: ein weiteres Ausführungsbeispiel der Erfindung in Draufsicht und in aufgeblasenem Zustand des Gaskissens;
- Fig. 9:: eine Seitenansicht einer in einem Fahrzeuginnenraum angeordneten Ausführungsform der Airbageinrichtung;
- Fig. 10:: ein Ausführungsbeispiel für eine Ventilsteuerung der Füllung des Gaskissens;
- Fig. 11:: ein Ausführungsbeispiel zur Anordnung des Gaskissens an einer Airbagwanne in Draufsicht; und
- Fig. 12:: verschiedene Entfaltungsstufen des Gaskissens.

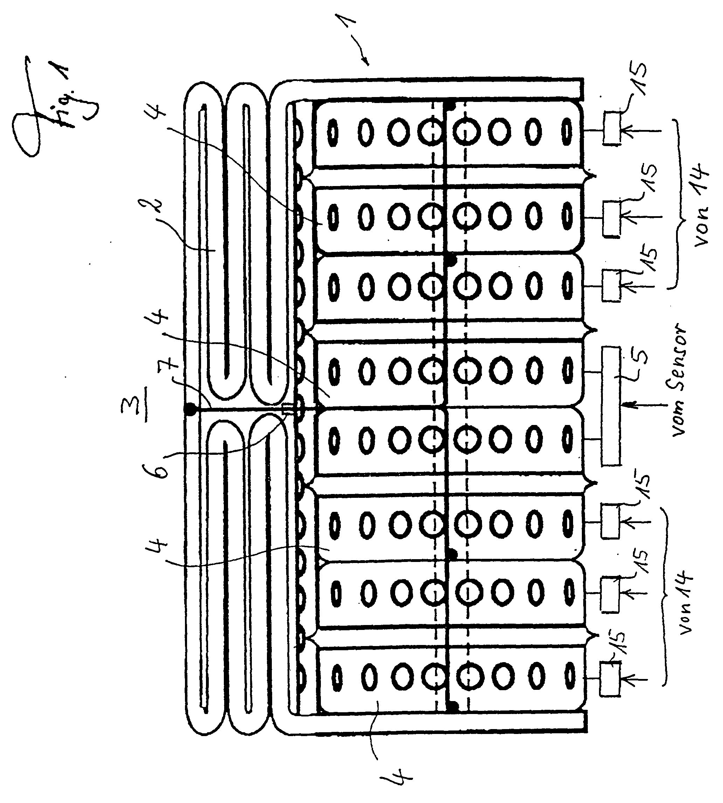

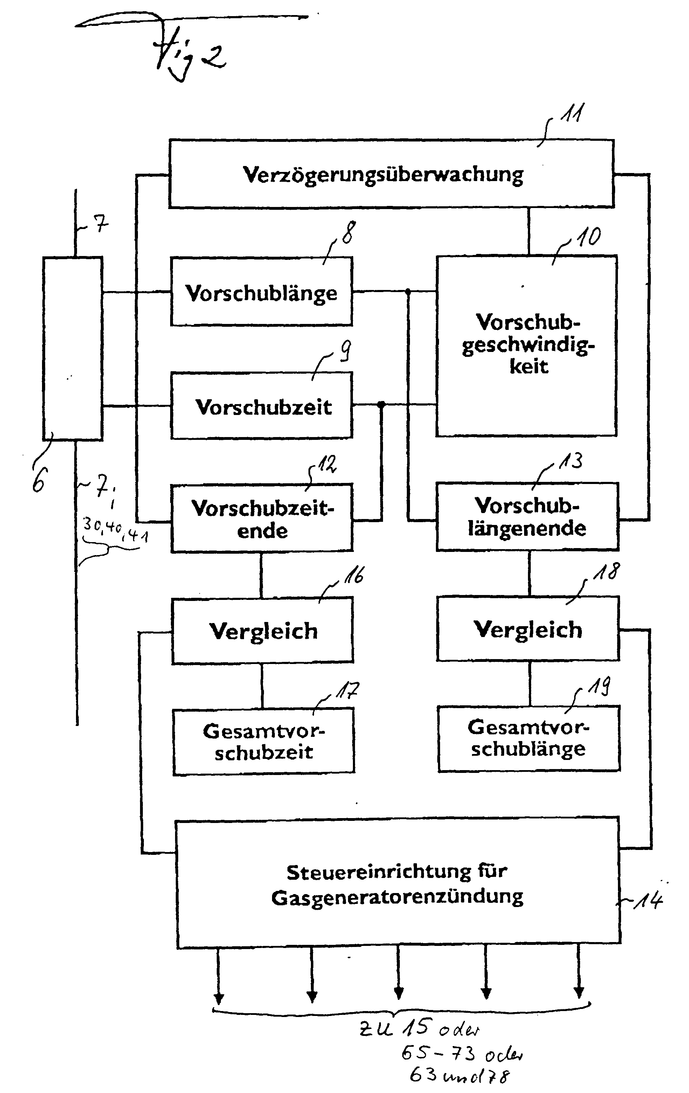

Die in der Fig. 1 dargestellte Fülleinrichtung besitzt ein Gaskissen 2, welches in gefaltetem Ruhezustand gezeigt ist. Eine aus mehreren Gasgeneratoren 4 bestehende Fülleinrichtung dient zum Auffüllen des Gaskissens mit einem Füllgas. Zum Befüllen des Gaskissens sind mehrere Gasgeneratoren 4 nebeneinander in der Fülleinrichtung 1 angeordnet. Die Airbagvorrichtung kann sich auf der Beifahrerseite im Armaturenbrett vor dem Beifahrersitz des Kraftfahrzeugs befinden.

Zum Zünden der Gasgeneratoren 4 sind den Gasgeneratoren zugeordnete Zündeinrichtungen 15 vorgesehen. Eine Primärzündeinrichtung 5 dient zur Zündung von insbesondere in der Mitte angeordneten Gasgeneratoren. Zur zeitlich nachfolgenden Zündung der jeweiligen sich nach außen hin anschließenden Gasgeneratoren sind Zündeinrichtungen 15 vorgesehen, die, wie noch erläutert wird, in gesteuerter Weise gezündet werden.

Der Vorschub des sich entfaltenden Gaskissens 2 kann mit Hilfe eines im Gaskisseninnern angeordneten Abtastmediums 7 erfolgen. Das Abtastmedium 7 ist mit dem Vorderteil des Gassackes 2 verbunden. Das Abtastmedium 7 ist in der Weise ausgebildet, daß es die Vorschubbewegung des Gassackes mit ausführt und daß diese Vorschubbewegung abgetastet werden kann. In bevorzugter Weise erfolgt eine Abtastung im Hinblick auf die Vorschublänge und/oder Vorschubzeit. Ferner ist in bevorzugter Weise eine Auswerteeinrichtung 6 vorgesehen, welche die Vorschubgeschwindigkeit des Abtastmediums 7 und damit des sich in den Fahrgastraum 3 bewegenden Gaskissens feststellt. Das Abtastmedium 7 kann in Form eines Fadens oder Bandes vorliegen, und es kann mit einer abtastbaren Codierung versehen sein. Die Abtastung kann kapazitiv, induktiv, optisch, mechanisch oder dergl. in der Abtasteinrichtung 6 erfolgen.

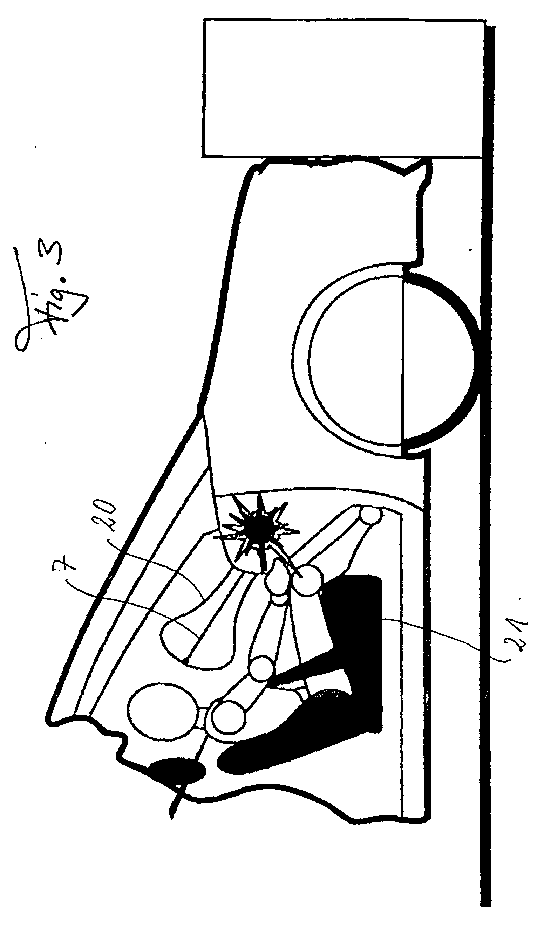

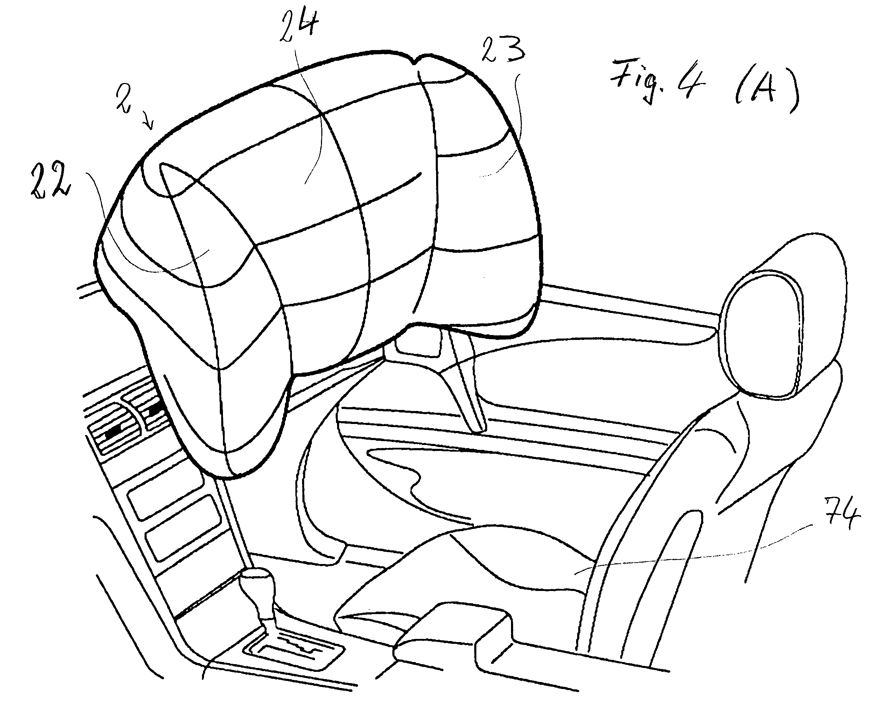

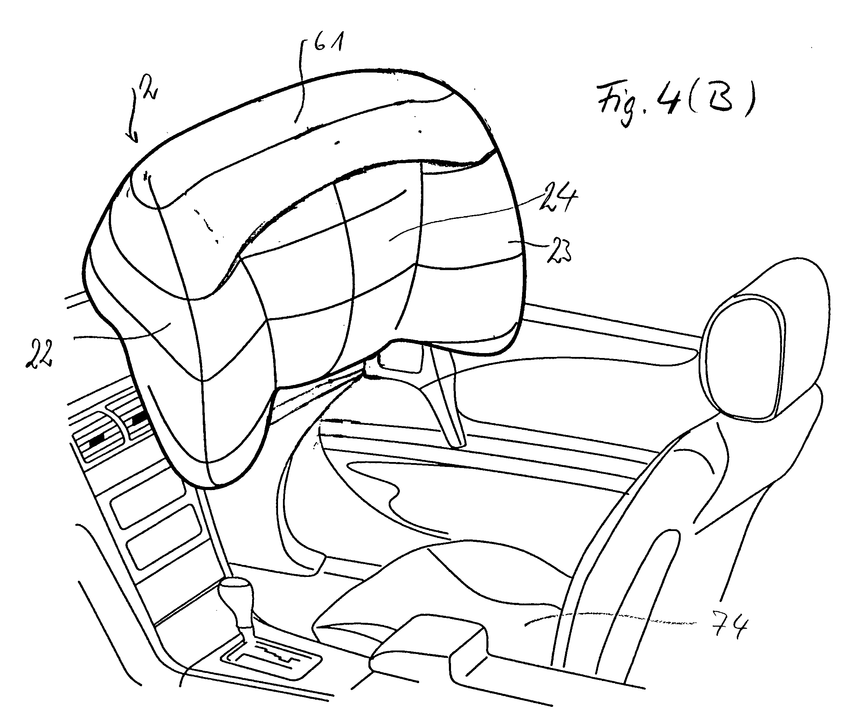

Anhand der in der Fig. 2 als Blockschaltbild dargestellten Auswerteeinrichtung, welche insbesondere als Mikroprozessor ausgebildet sein kann, und der Fig. 3 wird die Arbeitsweise des Ausführungsbeispiels bei einem Crashfall noch näher erläutert.

Wenn durch einen nicht näher dargestellten, insbesondere fahrzeugsensitiven Sensor eine überhöhte Fahrzeuggeschwindigkeitsänderung festgestellt wird, führt dies zur Auslösung der Primärzündung 5. Durch die Primärzündung 5 wird bevorzugt ein mittlerer Gasgenerator gezündet. Beim Ausführungsbeispiel der Fig. 1 werden zwei Gasgeneratoren 4 im mittleren Bereich der neben einander angeordneten Gasgeneratoren der Fülleinrichtung 1 gezündet. Durch diese Zündung erfolgt eine Anfangsphase des Füllvorgangs, bei welchem sich das Gewebe des Gaskissens 2 in einen vor der Airbagvorrichtung vorhandenen Fahrgastraum 3 geradlinig ausbreitet. Das Airbaggewebe kann sich beispielsweise mit einer in der Fig. 3 dargestellten Gaskissenform 20, die einem Pilz ähnelt, ausbreiten.

Bei dieser Bewegung in den Fahrgastraum 3 wird auch das Band oder fadenförmige Abtastmedium 7 mitbewegt, wobei diese Bewegung von der Abtasteinrichtung 6 festgestellt wird. Wenn sich in dem Ausbreitungsweg der in Fig. 3 dargestellten Gaskissenform 20 ein Hindernis, beispielsweise ein Kindersitz, auf dem Fahrzeugsitz 21 befindet, wird die Ausbreitungsgeschwindigkeit des Gassackgewebes abgebremst. Hierdurch wird auch die Auszugsgeschwindigkeit des Abtastmediums 7 gebremst, d.h. die pro Zeiteinheit von der Abtasteinrichtung 6 abgetastete Vorschubbewegung wird abgebremst.

Aus dem Meßsignal der Abtasteinrichtung 6 wird während der Vorschubbewegung der Gaskissenform 20 und damit während der Auszugsbewegung des Abtastmediums 7 ein der abgetasteten Strecke entsprechendes Signal von einer an die Abtasteinrichtung 6 angeschlossenen Einrichtung 8 gebildet. Gleichzeitig kann auch ein von der Vorschubzeit (Abtastzeit) abhängiges Signal durch eine an die Abtasteinrichtung 6 angeschlossene Einrichtung 9 gebildet werden. Sowohl die Einrichtung 8 zur Erfassung der Abtastlänge als auch die Einrichtung 9 zur Erfassung der Vorschub- bzw. Abtastzeit liefern ihre Ausgangssignale an eine Einrichtung 10 zur Bestimmung der Abtastgeschwindigkeit. Das von der Einrichtung 10 gebildete Signal entspricht der Geschwindigkeit, mit welcher der Vorschub des Gaskissens 2, insbesondere in der in der Fig. 3 dargestellten Anfangsphase des Füllvorgangs erfolgt.

Während des ungehinderten Vorschubes des Gaskissens ändert sich die Abtastgeschwindigkeit kontinuierlich bis zu einem Endgeschwindigkeitswert.

Mit Hilfe einer an die Einrichtung 10 angeschlossenen Einrichtung 11 läßt sich eine diskontinuierliche Änderung der Auszugsgeschwindigkeit feststellen. Die Einrichtung 11 stellt eine Diskontinuität des Vorschubgeschwindigkeitsignals, welches die Einrichtung 10 bildet, fest. Diese Diskontinuität kann beim Abbremsen der Vorschubbewegung des Gaskissens, insbesondere in seiner in der Fig. 3 dargestellten Form 20, durch ein Hindernis auftreten. Die Einrichtung 11 liefert zu diesem Zeitpunkt ein Stopsignal an eine Einrichtung 12, in welcher fortlaufend die Ist- Vorschub- bzw. Abtastzeit, beispielsweise durch eine entsprechend ausgebildete Zähleinrichtung, während der Vorschubbewegung bestimmt wird. Die Einrichtung 12 kann hierzu an die Einrichtung 9 angeschlossen sein. Gleichzeitig kann die Einrichtung 11 ein entsprechendes Stopsignal an eine an die Einrichtung 8 angeschlossene Einrichtung 13 liefern, welche während der Vorschubbewegung die jeweilige Ist- Abtastlänge feststellt. Wenn das Stopsignal von der Einrichtung 11 an die Einrichtung 13 geliefert wird, stoppt diese den entsprechenden Zählvorgang, so daß die Abtastlänge der Vorschubbewegung zum Zeitpunkt der aufgetretenen Diskontinuität, insbesondere bei der Abbremsung durch ein Hindernis, bestimmt ist.

Beide Einrichtungen 12 und 13 oder eine der beiden Einrichtungen liefern ein dem Abtastzeitende bzw. dem Abtastlängenende proportionales Signal an einen Vergleicher 16 und/oder Vergleicher 18.

Der Vergleicher 16 ist mit einem Speicher 17 verbunden, in welchem die zum Füllen des gesamten Füllvolumens des Gaskissens 2 erforderliche Gesamtzeit gespeichert ist. Eine an den Vergleicher 18 angeschlossene Speichereinrichtung 19 enthält einen der gesamten Auszugsstrecke des Abtastmediums 7 entsprechenden Wert.

Wenn während der Abtastung der in Fig. 3 dargestellten Füllanfangsphase ein Hindernis, beispielsweise in Form des Kindersitzes 79, die Vorschubbewegung des Gaskissens 2 behindert, wird durch die Einrichtung 11, bevor die gesamte Länge des Abtastmediums 7 ausgezogen ist, das Stopsignal an die Einrichtung 12 und/oder Einrichtung 13 geliefert. Das abgetastete Zeitende und/oder die abgetastete Auszugslänge sind dann geringer als die in den Speichern 17 und/oder 19 gespeicherten Werte für die Abtastzeit und die Abtastlänge. Im jeweiligen Speicher 16 und/oder 18, welcher als Quotientenbildner ausgebildet sein kann, wird ein Vergleich gebildet zwischen der tatsächlichen Ist - Abtastzeit, von welcher die Einrichtung 12 ein entsprechendes Signal liefert, und der Gesamtzeit, die bei unbehindertem Gesamtvorschub gegeben ist und im Speicher 17 abgelegt ist. Ferner kann ein Quotient gebildet werden aus der tatsächlich abgetasteten Auszugslänge des Abtastmediums 7, von der die Einrichtung 13 ein entsprechendes Signal liefert, mit der Gesamtauszugslänge, von der ein entsprechender Wert im Speicher 19 abgelegt ist. Beide oder einer der beiden so gebildeten Quotienten werden einer Steuereinrichtung 14 zugeführt. Die Steuereinrichtung 14 ist mit den mehreren Zündeinrichtungen 15 der Gasgeneratoren 4 verbunden.

In Abhängigkeit vom Quotientenwert, der im Vergleicher 16 und/oder 18 ermittelt wurde, steuert die Steuereinrichtung 14 eine entsprechende Anzahl von Zündeinrichtungen 15 an zur Zündung der zugeordneten Gasgeneratoren 4. In bevorzugter Weise erfolgt die Ansteuerung paarweise, so daß jeweils bezüglich einer Mittelebene der Fülleinrichtung 1 ein gezündeter Gasgenerator 4 liegt. Die Anzahl der gezündeten Gasgeneratoren entspricht dem Quotienten, der von der Vergleichseinrichtung 16 und/oder 18 gebildet wurde. Die Zündung der einzelnen Gasgeneratorpaare kann in zeitlicher Aufeinanderfolge geschehen.

Dabei ist zu beachten, daß die Steuerung des Airbags über die Vorschubzeit nicht unter die beanspruchte Erfindung fällt.

Auf diese Weise wird erreicht, daß dann, wenn ein Hindernis im Vorschubweg des Gaskissens 2 sich befindet, nur eine begrenzte Anzahl an Gasgeneratoren zum Füllen des Airbags gezündet wird. Die auf das Hindernis einwirkende Kraft ist aufgrund des verringerten Füllvolumens geringer als bei voll gefülltem Gaskissen.

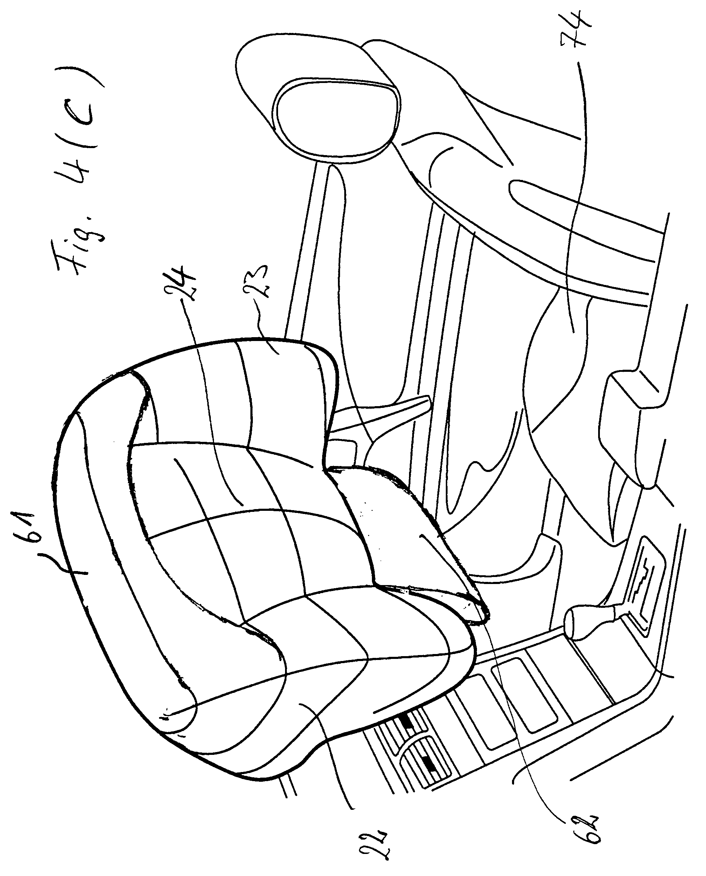

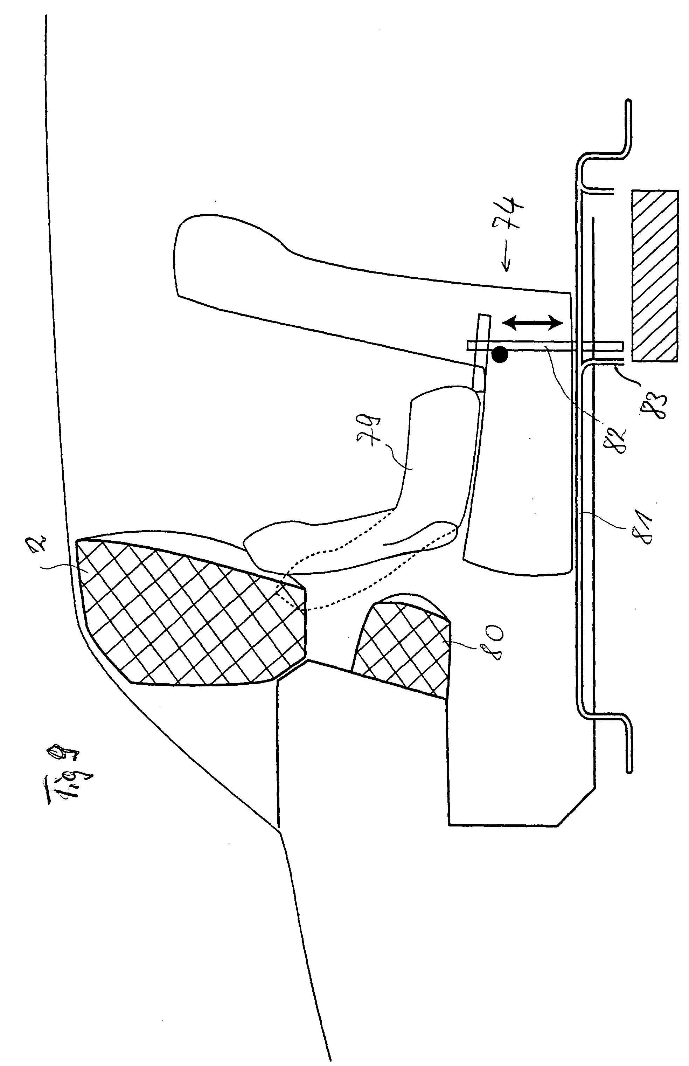

Die weiteren in den Fig. 4 bis 12 dargestellten Ausführungsbeispiele einer Airbagvorrichtung besitzen ein im Ruhezustand in der Instrumententafel untergebrachtes Gaskissen 2 und können ein im vertikalen Abstand davon angeordnetes unten liegendes Gaskissen (Kniebag 80, Fig. 9) aufweisen. Das Gaskissen 2, von dem perspektivische Darstellungen verschiedener Ausführungsformen im aufgeblasenen Zustand in den Darstellungen (A), (B), (C) der Fig. 4 gezeigt sind, besitzt ein mittleres Kissenteil 24. Zu beiden Seiten dieses mittleren Kissenteils befinden sich seitliche Kissenteile 22, 23. Die seitlichen Kissenteile 22, 23 ragen mit einer größeren Strecke in den Fahrzeuginnenraum als das mittlere Kissenteil 24. Wie aus den Figuren zu ersehen ist, ragt das mittlere Kissenteil 24 im aufgeblasenen Zustand soweit in den Fahrzeuginnenraum, insbesondere vor einen Beifahrersitz 74, daß bei einem Unfall vorverlagerte Körperteile geschützt werden. Das obere Gaskissen 2 dient zum Schutz im Kopf- und Torax-Bereich, und das unten liegende Gaskissen (Kniebag 80, Fig. 9) dient als Aufprallschutz im Kniebereich. Bei der Ausführungsform der Fig. 4(C) ist ein unterer, den unteren Teil der Instrumententafel umfassender Kissenansatz 62 für den Knieschutz angeformt.

Durch die beiden seitlichen Kissenteile 22, 23 wird erreicht, daß das Füllvolumen des gesamten Gaskissens 2 reduziert sein kann gegenüber herkömmlichen Gaskissen bei verbesserter Sicherheitsfunktion. Die verbesserte Sicherheitsfunktion ergibt sich vor allem dahingehend, daß auch dann, wenn der Fahrzeuginsasse in einer Out-Off-Position sich auf dem Fahrzeugsitz befindet, durch die seitlichen Kissenteile 22, 23 ein sicherer Aufprallschutz gewährleistet wird. Die seitlichen Kissenteile wirken als Führungselemente für das vorverlagerte Körperteil in Richtung auf das mittlere Kissenteil 24 zu, welches dann den endgültigen Aufprallschutz gewährleistet. Da das mittlere Kissenteil 24, welches sich im wesentlichen über die gesamte Breite der Sitzposition erstreckt, nur ein reduziertes Füllvolumen aufweist und infolgedessen in einer reduzierten Strecke sich in den Fahrgastraum erstreckt, wird vermieden, daß bei vorverlagertem Körper des Fahrzeuginsassen, z.B. in Schlafposition oder beim Hantieren im Handschuhfach, der vorverlagerte Kopf des Fahrzeuginsassen mit überhöhter Kraft beim Aufblasen des Gaskissens getroffen wird. Ferner kann in bevorzugter Weise die Aufblas- und Entfaltungsrichtung im spitzen Winkel zur vertikalen Richtung oder annähernd vertikal nach oben erfolgen.

Wenn auf dem Beifahrervordersitz 74 ein Kindersitz 79, insbesondere in Form eines dargestellten Rebord-Schalensitzes, angeordnet ist, wird durch die Gestaltung des oberen Gaskissens 2 und/oder des unteren Gaskissens 62 bzw. 80 gewährleistet, daß beim Aufblasen der Gaskissen keine überhöhten Kräfte auf den Kindersitz wirken unabhängig von der Neigung des Lehnenteils des Kindersitzes. In der ausgezogenen Sitzposition (mit relaltiv hoch gestellter Lehne des Kindersitzes ist die Anordnung so, daß das mittlere Kissenteil 24 des oben liegenden Gaskissens 2 den Kindersitz nicht berührt. In tiefer liegenden Neigungsstellungen des Kindersitzes, z.B. in der strichlierten Stellung in der Fig. 9 und darunter, befindet sich die Lehne des Kindersitzes 79 im Bereich des vertikalen Abstandes zwischen den beiden Gaskissen, so daß auch hier keine Kräfte auf den Kindersitz einwirken. Durch die beiden seitlichen Kissenteile 22 und 23 des oben liegenden Gaskissens 2 wird der Kindersitz seitlich abgesichert. Je nach Länge der Seitenteile 22 und 23 erreicht man einen zusätzlichen Seitenaufprallschutz.

Dadurch, daß die seitlichen Kissenteile 22, 23 im wesentlichen seitlich der normalen Sitzposition und auch der vorkommenden Out-Off-Positionen auf der einen Seite beim Aufblasen bewegt werden, besteht keine Gefahr einer überhöhten Krafteinwirkung auf den Körper des Fahrzeuginsassen und auf den Kindersitz 79 beim Füllen des Gaskissens. Auf der einen Seite erstreckt sich das aufgeblasene seitliche Kissenteil 23 entlang der seitlichen Innenraumbegrenzung (Vordertür, seitliches Vorderfenster) in den Fahrzeuginnenraum. Auf der anderen Seite erstreckt sich das seitliche Kissenteil 22 etwa in die Längsmittelebene des Fahrzeuginnenraums.

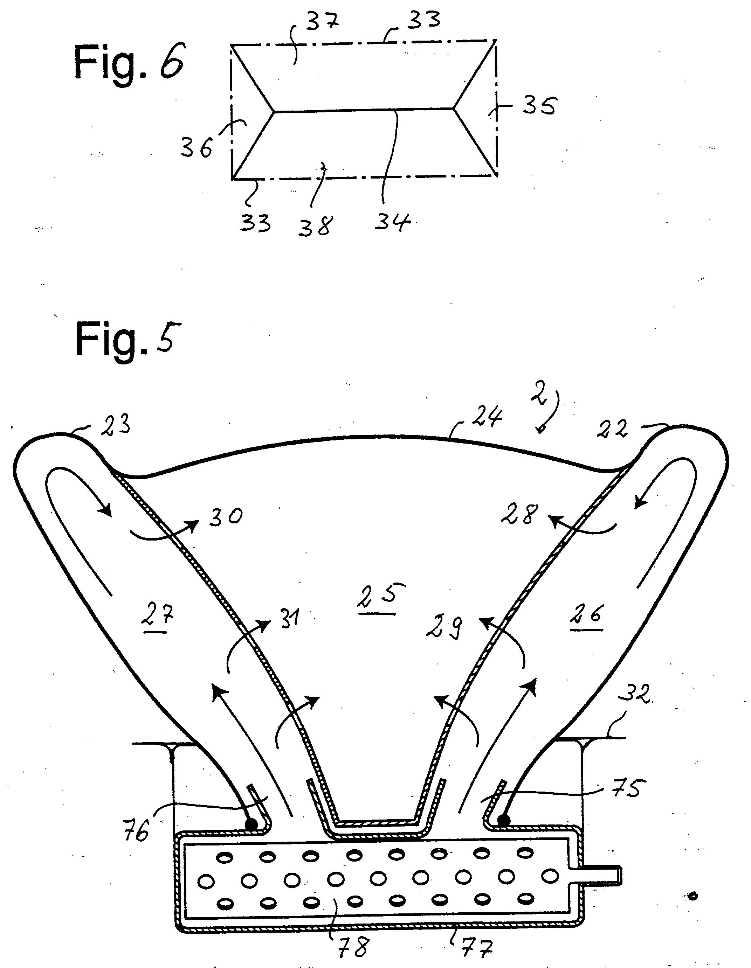

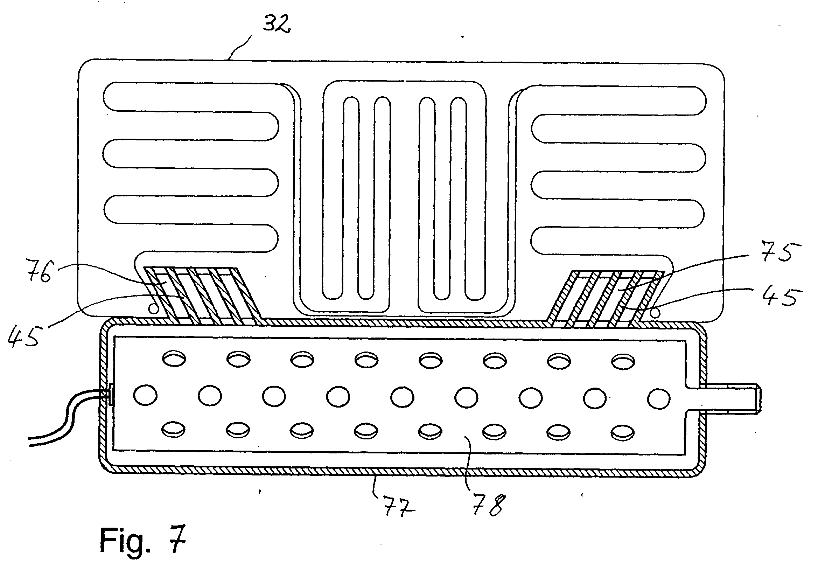

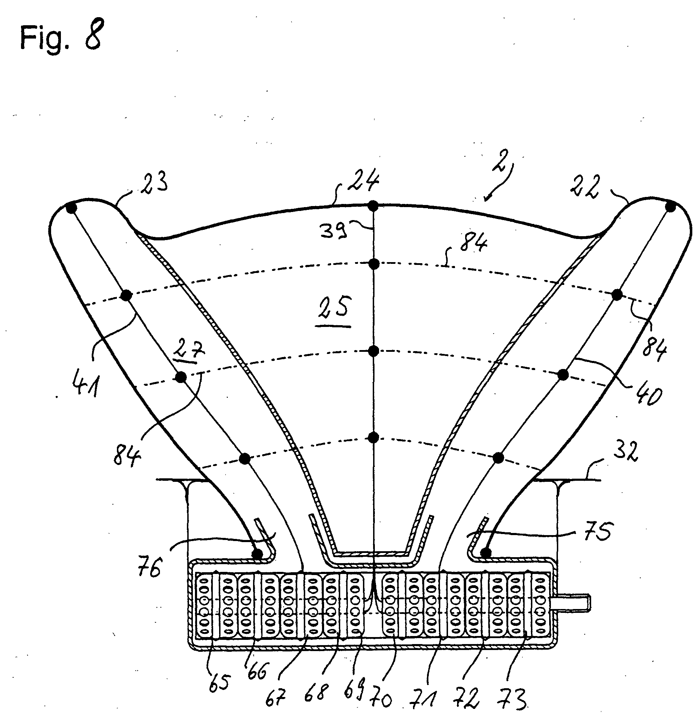

Wie insbesondere aus den Figuren 5 und 8 zu ersehen ist, werden die beiden seitlichen Kissenteile 22 und 23 im Winkel schräg nach außen, aus der in der Figur 7 gezeigten Ruheposition entfaltet und aufgeblasen. Mit Hilfe von Gasführungen 75 und 76 können den Kammern 26 und 27 der seitlichen Kissenteile 22 und 23 zugeordnete schräg nach außen gerichtete Gasströmungen erzeugt werden. In horizontaler Ausdehnung ist die Breite des jeweiligen seitlichen Kissenteils 22, 23 geringer als die des mittleren Kissenteils 24. Beim Aufblasen bzw. Entfalten der seitlichen Kissenteile 22 und 23 werden Öffnungen für Strömungswege 28, 29 und 30, 31 aus den seitlichen Kammern 26 und 27 in eine mittlere Kammer 25 des mittleren Kissenteils 24 geöffnet. Hierfür können speziell geformte Schlitze oder auch Ventile vorgesehen sein, welche nach dem Entfalten der seitlichen Kissenteile 22 und 23 in die mittlere Kammer 25 geöffnet sind. Bei dem in der Fig. 5 dargestellten Ausführungsbeispiel wird das Füllgas von einem Gasgenerator 78 erzeugt. Der Gasgenerator 78 kann in bekannter Weise ausgebildet sein und an seinem Umfang Gasauslaßöffnungen aufweisen. Nach dem Zünden des Gasgenerators 78, welches durch einen fahrzeugsensitiven Beschleunigungssensor veranlaßt werden kann, wird ausströmendes Gas von einer den Gasgenerator 78 umfassenden Umhüllung 77 gesammelt und durch die Gasführungen 75, 76 zuerst in die Kammern 26 und 27 der seitlichen Kissenteile 22 und 23 eingeleitet. Anschließend werden die Gasströme in den aufgeblasenen Kissenteilen 22 und 23 durch die geschaffen Öffnungen entlang der Strömungswege 28 und 29 sowie 30 und 31 in die Kammer 25 des mittleren Kissenteils 24 geleitet. Die Gasströmungswege sind durch Pfeile in der Fig. 5 verdeutlicht. Gegebenenfalls kann eine Umlenkung der Gasströme in den entfalteten seitlichen Kissenteilen 22 und 23 zu den Öffnungen in den Gasströmungswegen 28 und 30 erfolgen. Die Füllung des mittleren Kissenteils 24 erfolgt zeitverzögert gegenüber der Füllung der seitlichen Kissenteile 22 und 23, wobei der Zeitunterschied ca. 10 bis 12 ms betragen kann.

Hierdurch erreicht man ein "sanftes Aufblasen" des Gaskissens 2 aufgrund einer zeitverzögerten Gasstromführung in einem Mehrkammersystem des Gaskissens.

Durch den zeitlich vorgeschobenen Druckaufbau in den seitlichen Kissenteilen 22 und 23 erreicht man eine Einweiserfunktion, durch die etwa V-geformte Kontur der seitlichen Kissenteile 22 und 23. Bei einer Out-Off-Stellung des Fahrzeuginsassen, wird ein Abrutschen außerhalb des Airbagbereiches verhindert. Durch die beiden im Winkel zueinander gerichteten seitlichen Kissenteile wird eine zur Mitte des Gaskissens hin gerichtete Einweiserfunktion erreicht. Zu dem Zeitpunkt, in welchem die maximale Unfallschwere auftritt, ist auch das mittlere Kissenteil 24 aufgeblasen, so daß die volle Sicherheitsfunktion erreicht wird.

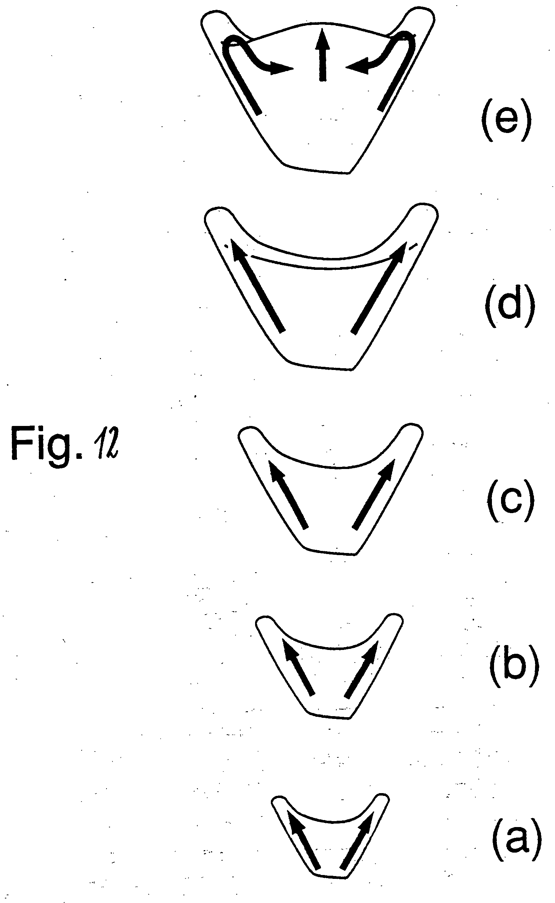

Die Befüllung des Gaskissens erfolgt so, daß die beiden seitlichen Kissenteile 22 und 23 etwa V-förmig sich öffnend aus der Airbagwanne, in welcher sie im Ruhezustand angeordnet sind, sich nach außen entfalten. Die Fig. 12 zeigt von unten nach oben verschiedene aufeinanderfolgende Entfaltungsstufen (a) bis (e) des Gaskissens. Der Körper, insbesondere Kopf- und Toraxbereich des vorverlagerten Fahrzeuginsassen wird vom Gaskissen auch an seinen beiden Seiten erfaßt. Das Gewebe, welches das mittlere Kissenteil umgibt, wird segelartig zwischen den beiden seitlichen Kissenteilen gespannt. Es kann daher im mittleren Kissenteil 24 ein geringerer Fülldruck aufgebaut werden als in den beiden seitlichen Kissenteilen, wodurch ein weiches Einsinken des vorgelagerten Körpers des Fahrzeuginsassen mit ausreichender Schutzfunktion erreicht wird. Die beiden seitlichen Kissenteile 22 und 23 umfassen den eingetauchten Körper des Fahrzeugsinsassen von der Seite und gewähren so auch einen Seitenaufprallschutz.

Bei den beiden in der Fig. 4 dargestellten Ausführungsformen der Darstellungen (B) und (C) ist an der Oberseite des Gaskissens ein Verbundkissenteil 61, über welches die beiden Kammern 26 und 27 der beiden seitlichen Kissenteile 22 und 23 miteinander verbunden sind, vorgesehen. Die Befüllung dieses oberen Verbundkissenteils 61 kann über die Kammern 26 und 27 der seitlichen Kissenteile erfolgen. Durch dieses Verbundkissenteil 61 wird nach oben für den eingetauchten Körper des Fahrzeuginsassen eine zusätzliche Schutzfunktion gewährleistet.

Bei den dargestellten Ausführungsbeispielen ragen die seitlichen Kissenteile 22 und 23 weiter in den Fahrgastraum als das mittlere Kissenteil 24. Es ist jedoch auch möglich, daß das mittlere Kissenteil 24 mit dem äußersten Rand seiner Wölbung sich gleich weit oder etwas weiter in den Fahrgastraum schiebt als die jeweiligen äußeren Kanten der seitlichen Kissenteile 22 und 23.

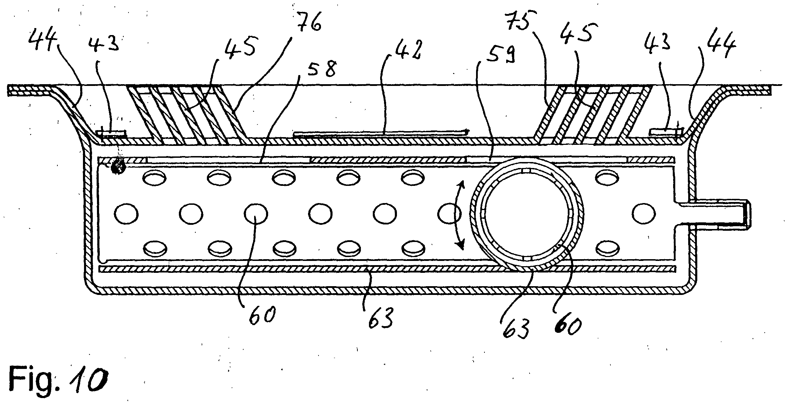

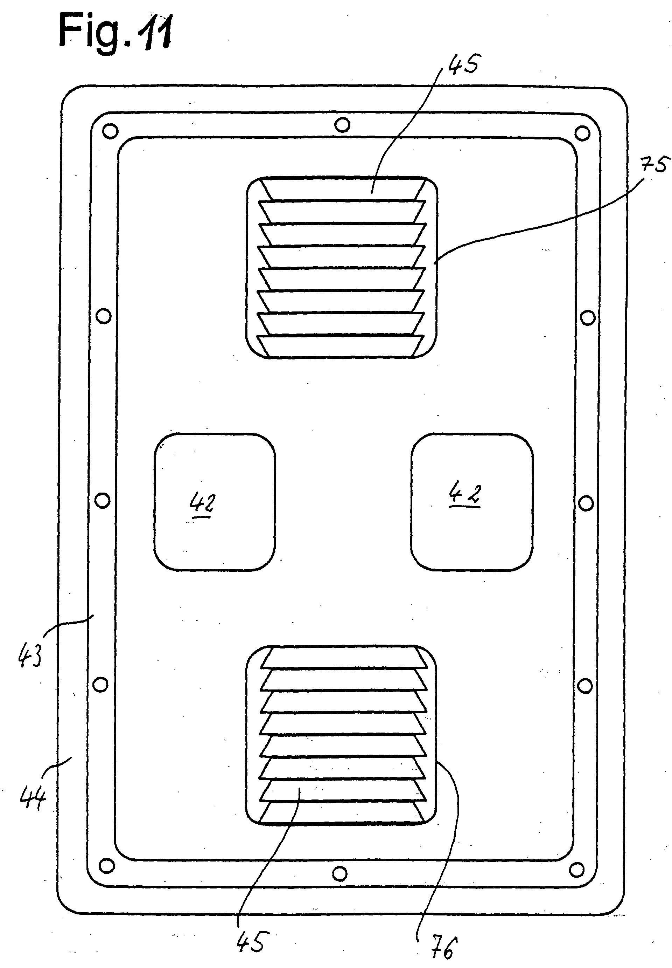

Zur Unterstützung der winkelgerichteten Gasströme in die Kammern 26 und 27 sind in bevorzugter Weise die Gasführungen 75 und 76 gegenüber einer vertikalen Mittelebene im Winkel nach außen gerichtet und können zusätzliche Leitbleche 45 (Fig. 10, 11) aufweisen. Zur Unterstützung der gewünschten Entfaltung ist das Gaskissen 2 im Ruhezustand (Fig. 7) in einer separaten Kammerfaltung (Sektionsfaltung) angeordnet. Hierdurch wird die oben erläuterte Entfaltung der Kissenteile 22, 23 und 24 erreicht. In einer Abdeckung 32, unter welcher das Gaskissen im Ruhezustand gefaltet ist, können in bevorzugter Weise linienförmige Schwachstellen bzw. Sollbruchstellen 34 eingeformt sein, die die geschilderte Entfaltung unterstützen. Eine geeignete Form derartiger Schwachstellen, insbesonder an der Innenseite der Abdeckung 32 ist in der Fig. 6 dargestellt. Hierdurch werden in strichpunktierten Linien 33 gezeigte Scharniere gebildet, um welche die von den Sollbruchlinien 34 gebildeten Klappen, beim Öffen der Abdeckung 32 geschwenkt werde. Bei der in Fig. 6 dargestellten Ausführungsform, werden zwei seitliche dreickförmige Klappen 35 und 36 und in der Mitte dazwischen zwei trapezförmige Klappen 37 und 38 gebildet.

Anstelle eines Gasgenerators können auch mehrere Gasgeneratoren, welche den jeweiligen Kammern zugeordnet sind zum Einsatz kommen, wobei bei der in der Fig. 5 gezeigten Ausführungsform jeder Kammer 25, 26 und 27 ein Gasgenerator zugeordnet sein kann.

Bei dem in der Fig. 8 dargestellten Ausführungsbeispiel sind die Kammern 25, 26 und 27 durch trennbare Verschlüsse 84, welche im jeweils teilweise gefüllten Zustand des Gaskissens sich senkrecht zur Vorschubrichtung erstrecken, jeweils in mehrere Fächer (drei Fächer beim dargestellten Ausführungsbeispiel) unterteilt. Die Trennwände 84 werden bevorzugt durch Aufreißnähte ausgebildet, welche durch den stufenweise von den jeweils den Fächern zugeordneten Gasgeneratoren 65 bis 73 erzeugten Fülldruck, aufgerissen werden. Die Aufreißnähte verlaufen bevorzugt parallel zur jeweiligen Faltung des Kissenteils.

Bei dieser Ausführungsform wird ferner die Vorschubgeschwindigkeit bevorzugt im Bereich jedes Kissenteils abgetastet. Wenn sich die Vorschubgeschwindigkeit ändert, ist dies ein Merkmal für ein Hindernis im Ausbreitungsweg des jeweiligen Kissenteils 22, 23, 24. Zur Abtastung der Vorschubgeschwindigkeit dienen den jeweiligen Kissenteilen zugeordnete Schnüre 39, 40 und 41. Diese Schnüre sind mit jeweils vorderen Enden der Kissenteile 24, 22 und 23 verbunden. Beim Aufblasen der Kissenteile wird die Geschwindigkeit, mit welcher die jeweiligen Schnüre 39, 40, 41 ausgezogen werden, gemessen. Wenn ein Abfall der Vorschubgeschwindigkeit eintritt, wird der Gasgenerator der dem nächstfolgenden Fach zugeordnet ist, nicht gezündet, so daß die entsprechende Trennwand bzw. Aufreißnaht 84 in der jeweiligen Kammer geschlossen bleibt. Hierdurch wird gewährleistet, daß selektiv bei den jeweiligen Kissenteilen 22, 23 und 24 die Vorschublänge in den Fahrzeuginnenraum nur so weit geht, bis ein Hindernis im Vorschubweg des jeweiligen Kissenteils vorliegt. Gleichzeitig wird jedoch auch bei einer Teilausblasung der jeweiligen Kammern der Kissenteile ein straffes Gaskissen erreicht, welches bei einem Aufprall die erforderliche Sicherheitsfunktion ausübt.

Wenn beispielsweise nach dem Aufblasen der ersten beiden Fächer in einer jeweiligen Kammer 25, 26, 27 im Vorschubweg ein Hindernis z.B. ein Körperteil des Fahrzeuginsassen liegt, wird das Aufblasen des nächstfolgenden Faches in der jeweiligen Kammer, durch Nichtzünden des zugeordneten Gasgenerators verhindert, so daß die jeweilige Trennwand 84 bzw. Aufreißnaht geschlossen bleibt. Die Abtastung der Vorschubbewegung kann in der Weise erfolgen wie es in der deutschen Patentanmeldung DE 196 11 384 A beschrieben ist.

Bei der Bewegung des jeweiligen Kissenteils 22, 23 und 24 in den Fahrgastraum werden auch die zugeordneten Bänder bzw. fadenförmigen Abtastmittel 30, 40, 41 mitbewegt. Die Bewegung wird von einer Abtasteinrichtung 6 (Fig. 2) festgestellt. Wenn sich in dem Auskleidungsweg der jeweiligen Kissenteile ein Hindernis befindet, wird die Ausbreitungsgeschwindigkeit abgebremst. Hierdurch wird auch die Auszugsgeschwindigkeit des Abtastmediums 39, 40, 41 gebremst, d.h. die pro Zeiteinheit von der Abtasteinrichtung 6 abgetastete Vorschubbewegung wird abgebremst . Aus dem Meßsignal der Abtasteinrichtung 6 wird während der Vorschubbewegung und damit während der Auszugsbewegung des jeweiligen Abtastmediums 30, 40, 41 ein der abgetasteten Strecke entsprechendes Signal von einer an die Abtasteinrichtung 6 angeschlossenen Einrichtung 8 (Vorschublängeneinrichtung) gebildet. Gleichzeitig kann auch ein von der Vorschubzeit (Abtastzeit) abhängiges Signal durch eine an die Abtasteinrichtung 6 angeschlossene Einrichtung 9 (Vorschubzeiteinrichtung) gebildet werden. Sowohl die Einrichtung 8 zur Erfassung der Abtastlänge als auch die Einrichtung 9 zur Erfassung der Vorschub- bzw. Abtastzeit liefern ihre Ausgangssignale an eine Einrichtung 10 zur Bestimmung der Abtastgeschwindigkeit. Das von der Einrichtung 10 gebildete Signal entspricht der Geschwindigkeit, mit welcher der Vorschub des jeweiligen Gaskissenteils 22, 23, 24 während des Füllvorgangs erfolgt. Während des ungehinderten Vorschubs des Gaskissens ändert sich die Abtastgeschwindigkeit kontinuierlich bis zu einem Endgeschwindigkeitswert. Auch hier ist zu beachten, daß die Steuerung, des Airbags über die Vorschubzeit nicht unten die beanspruchte Erfindung fällt.

Mit Hilfe einer an die Einrichtung 10 angeschlossenen Einrichtung 11 läßt sich eine diskontinuierliche Änderung der Auszugsgeschwindigkeit feststellen. Die Einrichtung 11 stellt eine Diskontinuität des Vorschubgeschwindigkeitssignals, welches die Einrichtung 10 bildet, fest. Diese Diskontinuität kann beim Abbremsen der Vorschubbewegung des jeweiligen Gaskissenteils durch ein Hindernis auftreten. Die Einrichtung 11 liefert zu diesem Zeitpunkt ein Stopsignal an eine Einrichtung 12, in welcher fortlaufend die Ist-, Vorschub- bzw. Abtastzeit, beispielsweise durch eine entsprechend ausgebildete Zelleinrichtung während der Vorschubbewegung bestimmt wird. Die Einrichtung 12 kann hierzu an die Einrichtung 9 angeschlossen sein. Gleichzeitig kann die Einrichtung 11 ein entsprechendes Stopsignal an eine an die Einrichtung 8 angeschlossene Einrichtung 13 liefern, welche während der Vorschubbewegung die jeweilige Ist-Abtastlänge feststellt. Wenn das Stopsignal von der Einrichtung 11 an die Einrichtung 13 geliefert wird, stoppt diese den entsprechenden Zellvorgang, so daß die Abtastlänge der Vorschubbewegung zum Zeitpunkt der aufgetretenen Diskontinuität, insbesondere bei der Abbremsung durch ein Hindernis bestimmt ist. Beide Einrichtungen 12 und 13 oder eine der beiden Einrichtungen liefern ein dem Abtastzeitende bzw. dem Abtastlängenende proportionales Signal an einen Vergleicher 16 und/oder Vergleicher 18. Der Vergleicher 16 ist mit einem Speicher 17 verbunden, in welchem die zum Füllen des gesamten Füllvolumens des Gaskissens, insbesondere des jeweiligen Füllvolumens der einzelnen Kissenteile 22, 23, 24 erforderliche Gesamtzeit gespeichert ist. Eine an den Vergleicher 18 angeschlossene Speichereinrichtung 19 enthält einen der gesamten Auszugsstrecke des jeweiligen Abtastmediums (Schnüre bzw. Bänder 39, 40, 41) entsprechenden Wert.

Wenn während der Abtastung beim Füllvorgang ein Hindernis beispielsweise in Form eines Kindersitzes oder eines vorverlagerten Körperteils des Fahrzeuginsassen die Vorschubbewegung des jeweiligen Kissenteils 22, 23, 24 behindert, wird durch die Einrichtung 11, bevor die gesamte Länge des Abtastmediums ausgezogen ist, das Stopsignal an die Einrichtung 12 und/oder Einrichtung 13 geliefert. Das abgetastete Zeitende und/oder die abgetastete Auszugslänge sind dann geringer als die in den Speichern 17 und/oder 19 gespeicherten Werte für die Abtastzeit und die Abtastlänge. Im jeweiligen Speicher 16 und/oder 18, welcher als Quotientenbildner ausgebildet sein kann, wird ein Vergleich zwischen der tatsächlichen Ist-Abtastzeit, von welcher die Einrichtung 12 ein entsprechendes Signal liefert, und der Gesamtzeit, die bei unbehindertem Gesamtvorschub gegeben ist und im Speicher 17 abgelegt ist, durchgeführt. Ferner kann ein Quotient gebildet werden aus der tatsächlich abgetasteten Auszugslänge des Abtastmediums, von der die Einrichtung 13 ein entsprechendes Signal liefert, mit der Gesamtauszugslänge, von der ein entsprechender Wert im Speicher 19 abgelegt ist. Beide oder einer der beiden so gebildeten Quotienten werden einer Steuereinrichtung 14 zugeführt. Die Steuereinrichtung 14 ist mit den Zündeinrichtungen, welche den jeweiligen Gasgeneratoren 65 bis 73 zugeordnet sind, verbunden. Hierdurch wird eine Steuerung der jeweiligen Gasgeneratorenzündung zur Befüllung der entsprechenden Fächer in den Kammern 25, 26, 27 der Gaskissenteile 22, 23, 24 erreicht.

Die Anzahl der jeweils gezündeten Gasgeneratoren entspricht dem Quotienten, der von der Vergleichseinrichtung 16 und/oder 18 gebildet wurde. Die Zündung der einzelnen Gasgeneratoren kann in zeitlicher Aufeinanderfolge geschehen. Auf diese Weise wird erreicht, daß dann, wenn ein Hindernis im Vorschubweg des jeweiligen Gaskissenteils sich befindet, nur eine begrenzte Anzahl der zugeordneten Gasgeneratoren 65 bis 73 zum Füllen der entsprechenden Fächer in den Kammern der Gaskissenteile gezündet wird. Die auf das Hindernis einwirkende Kraft ist aufgrund des veringerten Füllvolumens geringer als beim voll gefüllten Gaskissen 2.

In gleicher Weise kann in Abhängigkeit von dem Quotientenwert, den der Vergleicher 16 und/oder Vergleicher 18 liefert, eine Ventilsteuerung in der Weise durchgeführt werden, daß eine entsprechende Gasmenge dem jeweiligen Kissenteil zugeleitet wird, so daß der entsprechende Befüllungsgrad im Gaskissen erreicht ist. Hierzu kann eine in Fig. 10 dargestellte Blendeneinrichtung verwendet werden, welche als kreiszylindrische Blende ausgebildet ist und den Außenmantel des Gasgenerators 78 umgibt. In der Fig. 10 ist sowohl der Querschnitt des Gasgenerators 78 als auch der Blende 63 dargestellt. Der Gasgenerator 78 besitzt an seinem Umfang Gasauslaßöffnungen 60, die gleichmäßig in axialer Länge und in Umfangsrichtung verteilt sind. Die ausströmende Gasmenge wird durch die von der Blende 63 vermittelte axiale Führung und Umfangsführung zu Blendenöffnungen 58 und 59 geführt, welche beim Beginn des Füllvorgangs mit den Gasführungen 75, 76 des Diffusors fluchten. In den Gasführungen 75, 76 können Leitbleche 45 vorgesehen sein, welche die Spreizwirkung beim Entfalten der seitlichen Kissenteile 22, 23 unterstützen.

Solange ein ungehinderter Vorschub der Kissenteile erfolgt, wird die vom Gasgenerator 78 abgegebene Gasmenge im zylindrischen Hohlraum der Blende gesammelt und strömt aus den Blendenöffnungen 58 und 59 in die zugeordneten Gasführungen 75 und 76 zum Befüllen der seitlichen Kissenteile 22 und 23. Sobald der Vorschub durch ein Hindernis gehemmt wird, findet die im Zusammenhang mit der Fig. 2 erläuterte Aktivierung der zugeordneten Steuereinrichtung 14 statt. In Abhängigkeit von dem Quotientenwert, den der bzw. die Vergleicher 16 und/oder 18 liefern, werden in den entsprechenden Kissenteilen noch die entsprechenden Fächer der Kammern gefüllt. Das weitere Befüllen wird durch Drehen der Blende 63 unterbrochen. Dabei werden die Blendenöffnungen 58, 59 von ihren den Gasführungen 75, 76 gegenüberliegenden Positionen wegbewegt und das Gas in eine andere Richtung umgeleitet. Durch die Gasführungen 75, 76 wird kein Gas mehr zugeführt. Diese sind durch den Zylindermantel der Blende 63 abgedeckt.

Im Ausführungsbeispiel ist eine einteilige Blende dargestellt. Es ist jedoch auch möglich, die Blende 63 zweiteilig auszubilden, so daß separat der Blendenteil, welcher die Blendenöffnung 58 enthält, und der Blendenteil, welcher die Blendenöffnung 59 enthält, gesteuert werden können.

Falls die Befüllung des mittleren Kissenteils ebenfalls über eine zugeordnete Gaszuführung erfolgt, kann auch die dieser Gaszuführung zugeordnete Blendenöffnung separat gesteuert werden. Auf diese Weise läßt sich eine selektive Befüllung der jeweiligen Kammern in Abhängigkeit von unbehindertem Vorschub des jeweiligen Kissenteils erreichen, wobei für jedes Kissenteil eine in der Fig. 2 dargestellte Überwachungs- und Steuereinrichtung vorgesehen ist.

Die Steuerung der Füllgaszufuhr kann auch in der Weise erfolgen, daß in beliebigen der schematisch in der Fig. 12 dargestellten Füllstufen (a) bis (e) der Füllvorgang in Abhängigkeit vom ungehinderten Vorschub des sich entfaltenden Gaskissens angehalten ist.

In der Fig.11 ist eine Draufsicht auf das Ausführungsbeispiel der Fig. 10 dargestellt. Hierbei wird das Gaskissen an seinem Rand mit einem umlaufenden Befestigungsrahmen 43 fest mit dem Boden einer Airbagwanne 44 verbunden. Die Airbagwanne 44 kann integraler Bestandteil einer Instrumententafel sein. Beim dargestellten Ausführungsbeispiel ist der Gasgenerator 78 unmittelbar unter der Airbagwanne 44 angeordnet und kann mit dieser zu einem Modul verbunden sein. Es ist jedoch auch möglich, den Gasgenerator 78 getrennt von der Airbagwanne anzuordnen, wobei dann in gleicher Weise wie die Gaszuführungen 75, 76 entsprechende Fortsätze an die Airbagwanne angeformt sind, zu denen das von der Blende 63 eingeblendete Gas geleitet wird. Hierzu sind der Gasgenerator 78 und die um seinen Umfang angeordnete drehbare ringförmige Blende an einem geeigneten Ort, insbesondere an einem festen Teil des Fahrzeugaufbaus, fest angeordnet. Falls auch für das mittlere Kissenteil 24 eine separate Gaszuleitung vorgesehen ist, wird auch hierfür eine entsprechende Anformung an der Airbagwanne 44 vorgesehen.

Ferner ist an der Rückseite der Kammer 25 des mittleren Kissenteils ein Überdruckventil 42, beispielsweise in Form von einer oder mehreren Ventilklappen (zwei Ventilklappen beim Ausführungsbeispiel) vorgesehen. Dieses Überdruckventil öffnet, wenn in der Kammer 25 des mittleren Kissenteils 24 ein Fülldruck herrscht, der den eingestellten Sollwert überschreitet. Dies kann beispielsweise dann geschehen, wenn der Körper des Beifahrers in das mittlere Kissenteil 24 eintaucht. Hierdurch wird gewährleistet, daß das Kissengewebe nicht wie eine harte Wand wirkt, sondern das eintauchende Körperteil sanft auffängt.

Wie aus der Fig. 9 zu ersehen ist, stützt sich das oben liegende Gaskissen 2 im Bereich des Armaturenbrettes und auch in einem sich an die Frontscheibe anschließenden Dachbereich und zum Teil an der Frontscheibe des Kraftfahrzeuges ab. Hierdurch erreicht man ebenfalls eine Verringerung des Füllvolumens und der beim Aufblasen wirkenden Kräfte.

Am Beifahrersitz 74 kann ferner ein Begrenzungsriegel 82 (Fig. 9) vorgesehen sein, welcher beim Befestigen des Kindersitzes 79 in einem Begrenzungsfreiraum einer fahrzeugfesten Unterschiene 81 eintaucht. Der Begrenzungs- bzw. Bewegungsfreiraum für den Fahrzeugsitz ist nach vorne hin begrenzt durch einen Anschlag 83. Hierdurch wird gewährleistet, daß bei am Beifahrersitz 74 befestigten Kindersitz 79 der Beifahrersitz 74 nur in eine Position gebracht werden kann, in welcher keine überhöhten Krafteinwirkungen auf den Kindersitz in den verschiedenen Neigungsstellungen der Lehne des Kindersitzes einwirken. Durch den Anschlag 83 wird die vordere Position begrenzt. Hierdurch wird ein Sicherheitsabstand gewährleistet.

## Patentansprüche

1. Airbagvorrichtung in einem Kraftfahrzeug mit einem infolge einer Sensorauslösung durch eine Fülleinrichtung (1) mit Gas aufblasbaren Gaskissen (2), welches beim Aufblasen in einen Fahrgastraum des Kraftfahrzeugs vorschiebbar ist, wobei die von der Fülleinrichtung (1) in das Gaskissen (2) gelieferte Gasmenge durch die freie Weglänge vor dem Zusammenstoß mit einem äußeren Hindernis im Fahrgastraum (3) gesteuert ist,
**dadurch gekennzeichnet ,**
**daß** gleichzeitig mit dem Füllvorgang eine Vorschubabtastung erfolgt und daß bei einem Zusammenstoß mit einem äußeren Hindernis, in Abhängigkeit von der abgetasteten freien Weglänge, die in das Gaskissen (2) gelieferte Gasmenge so gesteuert ist, daß ein verringertes Füllvolumen an Gas in das Gaskissen (2) eingebracht wird.

2. Airbagvorrichtung nach Anspruch 1, **dadurch gekennzeichnet, daß** die dem Gaskissen (2) zugeführte Füllgasmenge stufenweise zugeführt wird.

3. Airbagvorrichtung nach Anspruch 1 oder 2, **dadurch gekennzeichnet, daß** das Gewebe des Gaskissens (2) in der Weise gefaltet und zur Fülleinrichtung (1) positioniert ist, daß in der abgetasteten Anfangsphase des Füllvorgangs das sich entfaltende Gewebe des Gaskissens (2) eine im wesentlichen geradlinige in den Fahrgastraum gerichtete Ausbreitungsrichtung, entlang welcher abgetastet wird, aufweist.

4. Airbagvorrichtung nach einem der Ansprüche 1 bis 3, **dadurch gekennzeichnet, daß** die Vorschubgeschwindigkeit abgetastet und eine Verringerung der Vorschubgeschwindigkeit erfaßt wird.

5. Airbagvorrichtung nach einem der Ansprüche 1 bis 4, **dadurch gekennzeichnet, daß** die Fülleinrichtung (1) mehrere Gasgeneratoren (4, 65 bis 73) zum Füllen des Gaskissens (2) aufweist und daß die Anzahl der zum Füllen gezündeten Gasgeneratoren (4, 65 bis 73) proportional der abgetasteten freien Weglänge des Gaskissens (2) ist.

6. Airbagvorrichtung nach einem der Ansprüche 1 bis 5, **dadurch gekennzeichnet, daß** das Gaskissen (2) seitliche an ein mittleres Kissenteil (24) angeformte Kissenteile (22, 23) aufweist und daß die seitlichen Kissenteile (22, 23) zeitlich früher aufblasbar sind als das mittlere Kissenteil (24).

7. Airbagvorrichtung nach Anspruch 6, **dadurch gekennzeichnet, daß** durch das Füllen von Kammern (26, 27) in den beiden seitlichen Kissenteilen (22, 23) Strömungswege (28 bis 31) zum Füllen des mittleren Kissenteils (24) geöffnet sind.

8. Airbagvorrichtung nach Anspruch 6 oder 7, **dadurch gekennzeichnet, daß** die beiden seitlichen Kissenteile (22, 23) über ein Verbundkissenteil (61) bevorzugt an ihren oberen Enden verbunden sind.

9. Airbagvorrichtung nach einem der Ansprüche 1 bis 8, **dadurch gekennzeichnet, daß** sie als Beifahrerairbagvorrichtung ausgebildet ist.

10. Airbagvorrichtung nach einem der Ansprüche 1 bis 9, **dadurch gekennzeichnet, daß** die dem Gaskissen (2) gelieferte Gasmenge durch Ventilsteuerung eingestellt ist.

11. Airbagvorrichtung nach einem der Ansprüche 6 bis 10, **dadurch gekennzeichnet, daß** die den jeweiligen Kammern (25, 26, 27) gelieferte Gasmenge durch eine oder mehrere gesteuerte Blenden (63), die im Strömungsweg zwischen der Gasquelle (4; 65 bis 73; 78) und den jeweiligen Kammern (25, 26, 27) vorgesehen ist bzw. sind, eingestellt ist.

12. Airbagvorrichtung nach einem der Ansprüche 6 bis 11, **dadurch gekennzeichnet, daß** die jeweiligen Kammern (25, 26, 27) des Gaskissens (2) in mehrere Fächer durch mittels Fülldruck trennbare Verschlüsse (84) unterteilt sind und daß die Fächer in Abhängigkeit von der Vorschubabtastung füllbar sind.

13. Airbagvorrichtung nach Anspruch 12, **dadurch gekennzeichnet, daß** die trennbaren Verschlüsse (84) etwa senkrecht zur Vorschubrichtung verlaufen.

14. Airbagvorrichtung nach einem der Ansprüche 6 bis 13, **dadurch gekennzeichnet, daß** im mittleren Kissenteil (24) ein niedrigerer Fülldruck vorliegt als in den beiden seitlichen Kissenteilen (22, 23).

15. Airbagvorrichtung nach einem der Ansprüche 1 bis 14, **dadurch gekennzeichnet, daß** der Füllgasdruck insbesondere im mittleren Kissenteil (24) in Abhängigkeit vom Gewicht des auf den Beifahrersitz befindlichen Fahrzeuginsassen eingestellt ist.

16. Airbagvorrichtung nach einem der Ansprüche 6 bis 15, **dadurch gekennzeichnet, daß** für die Kammer (25) des mittleren Kissenteils (24) ein Überdruckventil (42) vorgesehen ist, das dann geöffnet ist, wenn in der Kammer (25) ein Fülldruck herrscht, der den eingestellten Sollwert überschreitet.

## Claims

1. An airbag device in a motor vehicle having an airbag (2) inflatable with gas via an inflation device (1) as a result of sensor tripping, which airbag may be deployed into a motor vehicle passenger compartment upon inflation, the quantity of gas fed into the airbag (2) by the inflation device (1) being controlled by the free path length prior to collision with an external hindrance in the passenger compartment (3),
**characterised in that**
deployment sensing is performed at the same time as the inflation process and **in that**, in the event of collision with an external hindrance, the amount of gas fed into the airbag (2) is controlled as a function of the sensed free path length in such a way that a reduced volume of gas is introduced into the airbag (2).

2. An airbag device according to claim 1, **characterised in that** the quantity of inflation gas supplied to the airbag is supplied in stages.

3. An airbag device according to claim 1 or claim 2, **characterised in that** the fabric of the airbag (2) is folded and positioned relative to the inflation device (1) in such a way that, in the sensed initial phase of the inflation process, the unfolding fabric of the airbag (2) exhibits a direction of spread, along which sensing is performed, which is substantially straight and directed into the passenger compartment.

4. An airbag device according to one of claims 1 to 3, **characterised in that** the deployment speed is sensed and a reduction in deployment speed is detected.

5. An airbag device according to one of claims 1 to 4, **characterised in that** the inflation device (1) comprises a plurality of gas generators (4, 65 to 73) for inflating the airbag (2) and **in that** the number of gas generators (4, 65 to 73) ignited for inflation purposes is proportional to the sensed free path length of the airbag (2).

6. An airbag device according to one of claims 1 to 5, **characterised in that** the airbag (2) comprises lateral bag portions (22, 23) formed on a central bag portion (24) and **in that** the lateral bag parts (22, 23) may be inflated earlier than the central bag portion (24).

7. An airbag device according to claim 6, **characterised in that** the inflation of chambers (26, 27) in the two lateral bag portions (22, 23) opens up flow paths (28 to 31) for inflation of the central bag portion (24).

8. An airbag device according to claim 6 or claim 7, **characterised in that** the two lateral bag portions (22, 23) are connected preferably at their upper ends via a linking bag portion (61).

9. An airbag device according to one of claims 1 to 8, **characterised in that** it takes the form of a passenger airbag device.

10. An airbag device according to one of claims 1 to 9, **characterised in that** the quantity of gas supplied to the airbag (2) is adjusted by valve control.

11. An airbag device according to one of claims 6 to 10, **characterised in that** the quantity of gas supplied to the respective chambers (25, 26, 27) is adjusted by one or more controlled diaphagms (63), which is/are provided in the flow path between the gas source (4; 65 to 73; 78) and the respective chambers (25, 26, 27).

12. An airbag device according to one of claims 6 to 11, **characterised in that** the respective chambers (25, 26, 27) of the airbag (2) are subdivided into a plurality of compartments by closures (84) separable by means of inflation pressure and **in that** the compartments may be inflated as a function of deployment sensing.

13. An airbag device according to claim 12, **characterised in that** the separable closures (84) extend approximately perpendicularly to the deployment direction,

14. An airbag device according to one of claims 6 to 13, **characterised in that** a lower inflation pressure is present in the central bag portion (24) than in the two lateral bag portions (22, 23).

15. An airbag device according to one of claims 1 to 14, **characterised in that** the inflation gas pressure is adjusted, in particular in the central bag portion (24), as a function of the weight of the vehicle occupant located in the passenger seat.

16. An airbag device according to one of claims 6 to 15, **characterised in that** an overpressure valve (42) is provided for the chamber (25) of the central bag portion (24), which valve is opened when an inflation pressure prevails in the chamber (25) which exceeds the desired value set.

## Revendications

1. Dispositif de coussin d'air pour un véhicule automobile comportant un coussin de gaz (2) pouvant être gonflé avec du gaz par l'intermédiaire d'un dispositif de remplissage (1) par suite d'un déclenchement d'un capteur, pouvant être avancé lors du gonflement dans l'intérieur du véhicule, la quantité de gaz amenée du dispositif de remplissage (1) dans le coussin de gaz (2) étant commandée par la longueur du parcours libre avant la collision avec un obstacle extérieur à l'intérieur du véhicule (3),
**caractérisé en ce qu'**une détection de l'avance est effectuée simultanément au procédé de remplissage et **en ce qu'**en cas d'une collision avec un obstacle extérieur, la quantité de gaz amené dans le coussin de gaz (2) est commandé de sorte qu'en fonction de la longueur du parcours libre détectée, un volume de remplissage de gaz réduit est amené dans le coussin de gaz (2).

2. Dispositif de coussin d'air selon la revendication 1, **caractérisé en ce que** la quantité de gaz de remplissage amenée dans le coussin de gaz (2) est amenée progressivement.

3. Dispositif de coussin d'air selon les revendications 1 ou 2, **caractérisé en ce que** le tissu du coussin de gaz (2) est plié et positionné par rapport à la direction de remplissage (1) de sorte que lors de la phase initiale détectée du procédé de remplissage, le tissu du coussin de gaz (2), en train de se déplier, présente une direction de déploiement dirigée pour l'essentiel en ligne droite vers l'intérieur du véhicule, la détection se faisant le long de cette direction.

4. Dispositif de coussin d'air selon l'une des revendications 1 à 3, **caractérisé en ce que** la vitesse d'avance est détectée et **en ce qu'**une réduction de la vitesse d'avance est enregistrée.

5. Dispositif de coussin d'air selon l'une des revendications 1 à 4, **caractérisé en ce que** le dispositif de remplissage (1) comporte plusieurs générateurs de gaz (4, 65 à 73) destinés au remplissage du coussin de gaz (2) et **en ce que** le nombre des générateurs de gaz (4, 65 à 73) amorcés pour le remplissage est proportionnel à la longueur du parcours libre détectée du coussin de gaz (2).

6. Dispositif de coussin d'air selon l'une des revendications 1 à 5, **caractérisé en ce que** le coussin de gaz (2) comporte des parties latérales de coussin (22, 23) fixées à une partie centrale du coussin (24), les parties latérales du coussin (22, 23) pouvant être gonflées plus tôt que la partie centrale du coussin (24).

7. Dispositif de coussin d'air selon la revendication 6, **caractérisé en ce que** le remplissage de chambres (26, 27) dans les deux parties latérales du coussin (22, 23) entraîne l'ouverture de parcours d'écoulement (28 à 31) pour le remplissage de la partie centrale du coussin (24).

8. Dispositif de coussin d'air selon les revendications 6 ou 7, **caractérisé en ce que** les deux parties latérales du coussin (22, 23) sont reliées par une partie de coussin de liaison (61), de préférence au niveau de leurs extrémités supérieures.

9. Dispositif de coussin d'air selon l'une des revendications 1 à 8, **caractérisé en ce qu'**il a la forme d'un dispositif de coussin d'air pour un passager.

10. Dispositif de coussin d'air selon l'une des revendications 1 à 9, **caractérisé en ce que** la quantité de gaz amenée au coussin de gaz (2) est réglée par une commande à soupape.

11. Dispositif de coussin d'air selon l'une des revendications 6 à 10, **caractérisé en ce que** la quantité de gaz amenée aux chambres respectives (25, 26, 27) est réglée par une ou plusieurs diaphragmes commandés (63), agencées dans le parcours d'écoulement entre la source de gaz (4; 65 à 73; 78) et les chambres respectives (25, 26, 27).

12. Dispositif de coussin d'air selon l'une des revendications 6 à 11, **caractérisé en ce que** les chambres respectives (25, 26, 27) du coussin de gaz (2) sont subdivisées en plusieurs compartiments par l'intermédiaire de fermetures pouvant être séparées par la pression de remplissage, les compartiments pouvant être remplis en fonction de la détection de l'avance.

13. Dispositif de coussin d'air selon la revendication 12, **caractérisé en ce que** les fermetures séparables (84) s'étendent de façon pratiquement verticale par rapport à la direction d'avance.

14. Dispositif de coussin d'air selon l'une des revendications 6 à 13, **caractérisé en ce que** la pression de remplissage est plus réduite dans la partie centrale du coussin (24) que dans les deux parties latérales du coussin (22, 23).

15. Dispositif de coussin d'air selon l'une des revendications 1 à 14, **caractérisé en ce que** la pression du gaz de remplissage est réglée, en particulier dans la partie centrale du coussin (24), en fonction du poids du passager assis sur le siège du passager.

16. Dispositif de coussin d'air selon l'une des revendications 6 à 15, **caractérisé en ce que** la chambre (25) de la partie centrale du coussin (24) comporte une soupape de surpression (42) ouverte en présence d'une pression de remplissage supérieure à la valeur de consigne réglée dans la chambre (25).
